# EUROPÄISCHE PATENTANMELDUNG

(11) **EP 1 010 367 A1**
(43) Veröffentlichungstag der Anmeldung: **21.06.2000**
(21) Anmeldenummer: 99125018.4
(22) Anmeldetag: 15.12.1999
(51) Int. Cl.: A22C 13/00, A22C 13/02

(54) **Tragorgane für und Tragorgane mit Darmabschnitten sowie Verfahren und Vorrichtung zum Aufschieben der Darmabschnitte auf solche Tragorgane**

(30) Priorität: 15.12.1998 DE 29822243 U; 27.04.1999 DE 29907354 U
(71) Anmelder: Hackner, Hanspeter, 35789 Weilmünster (DE)
(72) Erfinder: Hackner, Michael, D-74564 Crailsheim (DE)
(74) Vertreter: Müller, Hans, Dipl.-Ing.

(57) **Zusammenfassung**

Ein Verfahren und eine Vorrichtung von zumindest einem Darmabschnitt auf ein als biegeweicher Flachmaterialstreifen ausgebildetes Tragorgan, welches anschließend mit dem einen oder den mehreren aufgeschobenen, in Ziehharmonikafalten gelegten Darmabschnitten auf das Füllrohr einer Füllmaschine aufgeschoben wird, zeichnen sich dadurch aus, dass jeder eine Darmfalte bildende Darmabschnitt in Aufschieberichtung des Darmes auf dem Tragorgan unter Bildung einer Darmfalte verschoben wird, ohne dass der Anfang des betreffenden Darmabschnittes dabei in Aufschieberichtung mit verschoben wird, so dass jede neue Darmfalte an bereits vorhandenen Darmfalten hingeschoben wird, ohne dabei bereits gefaltete Darmbereiche längs des Tragorgans zu verschieben.

## Beschreibung

### TECHNISCHES GEBIET

Die Erfindung betrifft Tragorgane für Rinder-Darmabschnitte und Tragorgane mit solchen und anderen Natur-Darmabschnitten, die in Ziehharmonikafalten auf dem jeweiligen Tragorgan abgelegt werden beziehungsweise abgelegt sind. Die Erfindung betrifft auch ein Verfahren und eine Vorrichtung zum Aufschieben derartiger Darmabschnitte auf Tragorgane.

Tragorgane mit in Ziehharmonikafalten aufgeschobenen Darmabschnitten werden in diesem Zustand zu Metzgereien oder sonstigen Wurstherstellern transportiert. Das Tragorgan dient einerseits als Transporthilfe, um die Darmabschnitte vom Konfektionierer der betreffenden Därme zu Metzgereien oder sonstigen Wurstherstellern hin zu transportieren. Andererseits dient das Tragorgan auch dazu, die Darmabschnitte auf das Füllrohr einer Wurstfüllmaschine zu bringen, wo die Darmabschnitte durch das Füllrohr hindurch mit Wurst- oder dergleichen Füllmassen befüllt werden. Nach seinem Aufbringen auf das Füllrohr wird das Tragorgan ohne die Darmabschnitte wieder vom Füllrohr entfernt.

### STAND DER TECHNIK

Um Würste herzustellen, die insbesondere eine Naturdarmhülle besitzen, werden in Darmsortierbetrieben oder bei vergleichbaren Darm-"Herstellern" die den Tieren entnommenen Därme nach Art und Größe sortiert auf stabförmige Tragorgane aufgeschoben. In diesem aufgeschobenen Zustand werden die Därme dann zu den Wurstherstellern geliefert. Dort werden die Därme von den Tragorganen gelöst und mit der jeweils gewünschten Wurstmasse befüllt.

Schlauch- oder rohrförmige Tragorgane sind seit Langem bekannt. Aus der CH-A-383 813 oder der FR-A-1.373.697 ist ein Tragorgan in Form eines Schlauches bekannt. Auf dem Schlauch werden Darmabschnitte in Ziehharmonikafalten abgelegt. Ein solcher mit Darmabschnitten bestückter Schlauch wird dann auf das Füllrohr einer Wurstfüllmaschine aufgeschoben und an dem Fülldorn befestigt. Beim Befüllen wird durch den einen zentralen Kanal aufweisenden Fülldorn die jeweilige Wurstmischung aus dem Dorn vorne herausgedrückt und in den von dem Fülldorn rückwärts wieder heruntergezogenen Darmabschnitt hineingefüllt. Um zu verhindern, dass während des Befüllvorganges der Schlauch rückwärts vom Dorn zusammen mit dem Darm herunterwandert, wird der Schlauch an dem Dorn befestigt. Dazu besitzt der Schlauch beispielsweise Ausnehmungen, die ein Anhängen des Schlauches an einem entsprechenden Dorn des Fülldorns erlauben. Nach Abschluß des Befüllens des Darmabschnittes mit der jeweiligen Wurstmischung wird der Schlauch wieder rückwärts vom Dorn zurückgezogen.

Ein schlauch- oder rohrförmiges Tragorgan ist auch aus der DE-OS 27 59 005 bekannt. Vor dem Aufziehen von Naturdärmen auf dieses aus elastischem Material bestehende Rohr wird das Rohr längs aufgeschnitten. Durch Eigenelastizität und gegebenenfalls durch planmäßiges Zusammendrücken des Rohrmantels geraten die Längsränder der Rohrwandung in mehr oder weniger sich überlappende Lage. Abgesehen von dem durch das Aufschneiden eines Rohres entstehenden Aufwand ist nachteilig, dass sich derartige Rohre nicht aufwickeln lassen.

Ein aus der DE-C2-30 29 808 bekanntes, ebenfalls rohrbeziehungsweise schlauchförmiges Tragorgan besitzt eine in seiner Längsrichtung verlaufende Perforationslinie. Diese Perforationslinie ermöglicht ein Aufreißen beziehungsweise Auftrennen des rohr- beziehungsweise schlauchförmigen Tragorgans in seiner auf einem Fülldorn aufsitzenden Lage. Die Richtung, in der Darmabschnitte auf dieses Tragorgan aufgeschoben worden sind, ist folglich gleich zu der Richtung, in der dieses Tragorgan aus den Schafsdarmabschnitten wieder herausgezogen wird. Damit läßt sich ein nach innen Umkrempeln der Darmenden vermeiden.Sofern Darmabschnitte mit umgekrempelten Darmenden auf einem Füllrohr aufsitzen, ist ein ordnungsgemäßes Befüllen der Darmabschnitte unmöglich.Nachteilig ist allerdings der mit dem Bereitstellen eines längs perforierten Schlauches bedingte Aufwand.

Aus der DE-T2-690 00 905 ist ein Tragorgan in Form eines Flachmaterialstreifens bekannt. Vor dem Aufbringen von Darmabschnitten auf diesen Flachmaterialstreifen wird der Flachmaterialstreifen in eine röhrenartige Form gebracht, wobei sich seine Längsränder überlappen. Das Herstellen dieser röhren- oder schlauchartigen Form bedingt eine planmäßige entsprechende Querverformung des Flachmaterial-streifens. Die dazu aus dieser Vorveröffentlichung bekannte Vorrichtung besitzt einen hohlen, abgeflachten Einlaufkonus mit endseitigen Schlitzen, um ein Überlappen der Längsränder des Flachmaterialstreifens zu ermöglichen. Um den Reibwiderstand zwischen dem Flachmaterialstreifen und der Innenseite des Einlaufkonus möglichst gering zu halten, können in diesem Einlaufkonus rollenartige Transportmittel angeordnet sein. Eine derartige Transport- und Verformungsvorrichtung zum Erzeugen eines Schlauches aus einem Flachmaterialstreifen muss technisch relativ aufwendig konstruiert sein, um ein störungsfreies Durchschieben des Flachmaterialstreifens mit gleichzeitiger Querverformung desselben zu einem Schlauch sicherzustellen.

Ein aus der DE-C2 42 12 522 bekanntes Tragorgan besitzt keine Schlauchform mehr. Dieses Tragorgan besteht aus einer in der Mitte längs gefalteten, biegsamen Leiste. Querschnittsmäßig liegt bei diesem Tragorgan damit kein geschlossener Umfang sondern ein offener V-Querschnitt vor. Dieses Tragorgan umschließt nicht mehr das Füllrohr der Wurstbefüllmaschine, so wie das bei den schlauch- oder rohrförmigen Tragorganen der Fall ist, sondern es sitzt rittlings, wie ein umgekehrtes V, dachartig auf dem im Querschnitt kreisförmigen Füllrohr. Nachteilig bleibt bei diesem wie auch bei allen anderen vorbekannten Tragorganen, dass sie sich gar nicht oder nur sehr schlecht aufwickeln lassen. So besitzen alle Querschnitte, auch die der V-förmigen, zusammengefalteten Leisten, eine nicht konstante Dicke über ihren Aufwickelquerschnitt; die beiden Schenkel der gefalteten Leiste sind je nach "Schärfe" der Faltung im Bereich ihrer gemeinsamen Knicklinie oder in der Nähe derselben dicker als im übrigen Querschnittsbereich. Dadurch bekommen die einzelnen Wickelbahnen eines entsprechend aufgewickelten Rollenkörpers eine zur Rollenachse schiefe Ausrichtung, was ein Aufwickeln unmöglich macht oder zumindest stark einschränkt.

Auch bei dem aus der DE-A-195 45 173 bekannten Tragorgan ist keine Schlauchform vorhanden. Dieses Tragorgan besteht aus einem biegesteifen Kunstharz-Flachmaterialstreifen, der zu seiner Längsaussteifung mit Längswülsten versehen ist. Solche Tragorgane können als Spritzguss- oder Strangguss-Teile aus Kunststoff in Stangenform hergestellt werden.

### DARSTELLUNG DER ERFINDUNG

Ausgehend von diesem Stand der Technik liegt der Erfindung die Aufgabe zugrunde, eine optimale Möglichkeit zum Bereitstellen, Transportieren und Weiterverarbeiten von auf Tragorganen aufgerafften Darmabschnitten anzugeben.

Diese Erfindung ist für das erfindungsgemäße Verfahren durch die Merkmale des Anspruchs 1 gegeben. Eine entsprechende Vorrichtung ist Gegenstand des nebengeordneten Anspruchs 5. Ein für Rinder-Darmabschnitte geeignetes Tragorgan ist durch die Merkmale des Anspruchs 22 und ein auch für sonstige Darmabschnitte geeignetes erfindungsgemäßes Tragorgan durch die Merkmale des Anspruchs 23 gegeben. Weiterbildungen der Erfindungen sind Gegenstand von sich an die jeweiligen Ansprüche anschließenden Unteransprüchen.

Das erfindungsgemäße Verfahren zeichnet sich insbesondere dadurch aus, wie der oder die Darmabschnitte auf dem betreffenden Tragorgan in Ziehharmonikafalten gelegt werden. Bei dem erfindungsgemäßen Verfahren erfolgt dies in der Weise, dass beim Bilden der Ziehharmonikafalten bereits vorhandene Darmfalten nicht auf dem Tragorgan verschoben werden, sondern dass jede neue Falte gegen bereits vorhandene Darmfalten hingeschoben wird. Das bedeutet, dass jede neue Falte nicht - bezogen auf das Tragorgan - an der gleichen Stelle hergestellt wird, sondern dass die Stelle, an der die jeweils neue Falte hergestellt wird, längs des Tragorgans wandert. Dies hat den Vorteil, dass bereits gefaltete Darmbereiche während des Faltvorganges nicht verschoben werden, so wie dies beispielsweise bei im Stand der Technik bekannten Darmaufziehgeräten der Fall ist.

Bekannte Darmaufziehgeräte besitzen stationäre Aufschubrollen, die von oben und unten, beidseitig, an einem auf einem Dorn aufgeschobenen Darmabschnitt rotierend anliegen. Beim Rotieren werden die Ziehharmonikafalten des Darmabschnittes hinter den beiden Aufschubrollen erzeugt. Der jeweils in Ziehharmonikafalten gelegte Darmabschnitt wird bei diesem Faltvorgang von den Aufschubrollen kontinuierlich weggeschoben. Das bedingt, dass der Darm auf dem mit dem Tragorgan abgedeckten Dorn entlanggleiten können muss.

Bei einem auch in der Zeichnung näher dargestellten Ausführungsbeispiel wird eine Vorrichtung dargestellt, mit der ein weitestgehend automatisiertes Aufbringen von Darmabschnitten auf ein Tragorgan auf wirtschaftlich günstige Weise möglich ist.

Das im nebengeordneten Anspruch 22 angegebene erfindungsgemäße Tragorgan ermöglicht es erstmals, auch Darmabschnitte von Rindern in gleicher Weise wie sonstige Natur-Darmabschnitte als Transporteinheit Wurstherstellbetrieben oder vergleichbaren Verbrauchern bereit zu stellen. Bisher konnten Rinderdärme aufgrund ihres relativ großen Querschnittes und ihrer relativ dicken Darmwand nicht auf den eingangs zum Stand der Technik erwähnten Tragorganen aufgerafft und in solcher Form dem jeweiligen Verbraucher bereitgestellt werden. Es ist vorgesehen, dass seine beiden mit Darmabschnitten freien Endbereiche aneinander befestigt werden. Auf diese Weise wird auch beim Transport von nur einem einzigen derartigen, mit Darmabschnitten versehenen Tragorgan wirkungsvoll verhindert, dass der Darm ganz oder teilweise von dem Tragorgan ungewollt herunterrutschen könnte.

Zum Befestigen können die beiden Endbereiche des Tragorgans miteinander verheftet oder verklebt werden. Eine andere Möglichkeit der Befestigung ist bei einem Tragorgan aus Kunststoffmaterial gegeben, indem die beiden Endbereiche des Tragorgans miteinander verschweißt werden können. Das Verschweißen ist mittels eines grundsätzlich mit im Stand der Technik bekannten Schweißgeräten, wie sie beispielsweise beim Folienverschweißen eingesetzt werden, ohne weiteres möglich.

Die Merkmale des nebengeordneten Anspruchs 23 beinhalten ein erfindungsgemäßes Tragorgan, so wie es bei dem erfindungsgemäßen Verfahren und der erfindungsgemäßen Vorrichtung zum Einsatz kommen kann. Dieses erfindungsgemäße Tragorgan in Form eines biegeweichen Flachmaterialstreifens besitzt eine Breite, die geringer ist als der Umfang des auf ihm vorhandenen Darmabschnittes. Während des Transportes eines solchen mit Darmabschnitten bestückten Tragorgans und beim Aufschieben desselben auf den Fülldorn einer Wurstfüllmaschine liegt damit kein zu einem Schlauch verformter biegeweicher Flachmaterialstreifen vor. Es hat sich nämlich gezeigt, dass es nicht erforderlich ist, in den Flachmaterialstreifen irgendwelche Verformungen, seien es Querfalten oder Längsfalten, einzubringen und dass es insbesondere auch nicht erforderlich ist, den Flachmaterial-streifen so breit bereitzustellen, dass er den Fülldorn einer Wurstfüllmaschine vollständig umfangsmäßig umschließen kann. Ein derartiges erfindungsgemäßes Tragorgan kann damit aus extrem wenig Material hergestellt werden. Neben dieser gegenüber dem Stand der Technik vorhandenen Materialeinsparung erweist sich als weiterer Vorteil, dass das Tragorgan nicht in Querrichtung planmäßig vorverformt zu werden braucht.

Das erfindungsgemäße Tragorgan hat den Vorteil, dass es aufgrund seiner Ausbildung als Flachmaterial-Streifen einen sehr einfachen Querschnitt hat. So muss weder ein schlauch- oder rohrförmiger Körper hergestellt noch ein Flachmaterial-streifen längs gefaltet werden. Bei einem Massenartikel, wie es derartige Tragorgane sind, liegt bereits darin ein beachtlicher wirtschaftlicher Vorteil.

Darüber hinaus lassen sich derartige Flachmaterial-Streifen infolge ihrer bahnartigen Ausbildung problemlos auch zu sehr großen Rollenkörpern aufwickeln. Derartige Rollenkörper können dem Darmsortierbetrieb oder einem sonstigen Darm-Hersteller wirtschaftlich günstig zur Verfügung gestellt werden. Beim Abziehen der jeweils mit Darmabschnitten aufzufädelnden einzelnen Tragorgane werden dann die Streifen entsprechend von der Rolle abgetrennt.

Die mit Darmabschnitten besetzten Tragorgane werden nacheinander auf das Füllrohr einer Wurstfüllmaschine geschoben. Das Tragorgan wird dann rückwärts unter den Darmabschnitten heraus- und von dem Rohr abgezogen. Um das Ergreifen der Tragorgane durch eine Bedienperson zu erleichtern, kann eine Griffvorrichtung an dem Tragorgan-Streifen vorhanden sein. Diese Griffvorrichtung kann durch eine Materialausnehmung im Streifen ausgebildet werden. So kann beispielsweise ein Griffloch in dem Streifen ausgeschnitten oder ausgestanzt sein. Dieses beispielweise Ausstanzen kann im Zusammenhang mit dem Ablängen der Streifen von dem vorstehend erwähnten Rollenkörper erfolgen. Das Griffloch kann ebenso wie eine an oder auf dem Tragorgan angebrachte Markierung anzeigen, wo "vorne" und "hinten" an dem Tragorgan ist, und kann damit zur Richtungsorientierung beitragen.

Wirtschaftlich einfach lässt sich das Tragorgan aus einem Kunststoffmaterial herstellen. Dabei kann der Kunststoff sehr biegeweich sein, da er nicht rittlings oder dachförmig auf einem Füllrohr aufzusitzen braucht, sondern seitlich schlaff am Füllrohr herunterhängen kann.

Die Möglichkeit, ein in Quer- und Längsrichtung äußerst biegeweiches und schlaffes Tragorgan zu verwenden, erlaubt die Verwendung von sehr kostengünstigem Kunststoffmaterial. Allerdings ist das Auffädeln von Darmabschnitten auf einen derart biegeweichen Kunststoffstreifen problemhaft.

Erfindungsgemäß kann eine entsprechende Aufschubvorrichtung vorgesehen werden, um Darmabschnitte auf ein Tragorgan wirtschaftlich einfach aufschieben zu können. Diese Aufschubvorrichtung kann eine Pressvorrichtung aufweisen, mit der das Tragorgan in seinem einen Endbereich zumindest in einem Teilbereich während des Aufschubvorganges an einer stabförmigen Halterung, auf der der Aufschubvorgang stattfindet, lagefixierbar ist. Diese Pressvorrichtung kann eine auf die Halterung aufsetzbare Buchse oder Büchse sein. Diese Buchse oder Büchse kann aufschraubbar oder clipsartig aufschiebbar sein. Die Buchse oder Büchse kann dabei direkt oder indirekt an der Halterung befestigt sein. Um den Darm während des Aufschiebens auf die stabförmige Halterung und damit auch auf die Buchse oder Büchse nicht zu verletzen, kann die Buchse oder Büchse eine ausgerundete Stirnfläche aufweisen.

Sofern die Pressvorrichtung in Form einer Büchse, d.h. mit einem Boden ausgebildet ist, kann vorgesehen sein, in diesem Bodenbereich eine Öffnung auszubilden. Diese Öffnung steht in Verbindung mit einer zentralen Längsbohrung eines Tragrohres. Während im Stand der Technik durch diese Längsbohrung hindurch Wasser hindurchgedrückt wird, um das vor dem Tragrohr befindliche Darmstück aufweiten und dadurch leichter auf das Rohr aufschieben zu können, kann erfindungsgemäß statt des Wassers eine Salzlake verwendet werden. Das Verwenden von Salzlake hat den Vorteil, dass die Salzschicht, die an dem Darm vorhanden ist, nicht vom Wasser abgelöst wird. Außerdem ist es nach dem Aufschieben sowieso erforderlich, die Tragorgane mit den aufgeschobenen Därmen in Salz beziehungsweise Salzlake zu lagern, um sie beschädigungsfrei zu den Wurstbetrieben befördern zu können.

Es kann beispielsweise beim Abwickeln von Flachmaterial-Streifen von einem entsprechenden Rollenkörper eine Vereinzelungsvorrichtung zum Herstellen dieser einzelnen Tragorgane vorgesehen werden. Diese Vereinzelungsvorrichtung kann eine Schneid- und/oder Stanzvorrichtung enthalten. Dabei kann vorgesehen sein, dass - auch gegebenenfalls in einer gemeinsamen Baugruppe - neben der Vereinzelungsvorrichtung noch eine Stanze zum Herstellen von zumindest einer Materialausnehmung zum leichten Greifen des Flachmaterial-Streifens vorhanden ist.

Wie vorstehend schon erwähnt, kann vorgesehen werden, den Aufschubvorgang dadurch zu unterstützen, dass durch die stabförmige Halterung, auf der das jeweilige Tragorgan lagefixiert gehalten ist, nicht Wasser, sondern Salzlake hindurchgedrückt wird. Der dafür erforderliche Längskanal in der stabförmigen Halterung kann zentrisch, so wie im Stand der Technik bekannt, oder auch auf der Außenseite der stabförmigen Halterung ausgebildet sein. Dieser Längskanal kann in einer entsprechenden Längsnut verlaufen. Dabei kann dieser Längskanal als separater Kanalkörper in einer entsprechenden Nut gelagert sein. Dies hat den Vorteil, dass der gegenüber einem Wasserkanal stärker belastete Salzlaken-Kanal unabhängig von der stabförmigen Halterung ausgetauscht beziehungsweise gereinigt werden kann.

Als Transportzustand für mit Darmabschnitten versehene Tragorgane hat es sich als günstig herausgestellt, die mit Darmabschnitten freien Endbereiche des Tragorgans umzufalten. In diesem Zustand können die Tragorgane mit ihren aufgeschobenen Darmabschnitten beispielsweise in Schichten übereinandergelegt in einem Behältnis sicher transportiert werden. Dabei kann vorgesehen sein, die schichtweise übereinandergestapelten Tragorgane erst in ein Netz einzulagern und dann ein derartiges, mit Tragorganen gefülltes Netz in einem mit Salzlake gefüllten Eimer einzulagern. Die Technik des Umfaltens der beiden Endbereiche der Tragorgane ist regelmäßig nicht ausreichend bei Rinderdärmen, was vorstehend näher ausgeführt ist.

Weitere Vorteile und Merkmale der Erfindung ergeben sich durch die in den Ansprüchen ferner aufgeführten Merkmale sowie aus den nachstehenden Ausführungsbeispielen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: eine Draufsicht auf ein noch keine Darmabschnitte tragendes einzelnes Tragorgan nach der Erfindung,
- Fig. 2: eine schematisierte Darstellung eines Rollenkörpers mit einem Tragorgane darstellenden Band eines Flachmaterialstreifens und mit einer ersten Abtrennvorrichtung zum Herstellen einzelner Tragorgane aus dem aufgewickelten Flachmaterialstreifen,
- Fig. 3: einen Längsschnitt durch ein auf einem Tragdorn klemmend gehaltenes Tragorgan nach Fig. 1, auf das ein Darmabschnitt aufgeschoben und auf demselben in Ziehharmonikafalten abgelegt werden soll,
- Fig. 4: einen Querschnitt längs der Linie IV - IV in Fig. 3,
- Fig. 5: eine schematisierte Darstellung von in einem Netz befindlichen, Darmabschnitte tragenden Tragorganen nach der Erfindung,
- Fig. 6: ein auf einem Flachmaterialstreifen aufgeschobener Rinder-Darmabschnitt,
- Fig. 7: den umgefalteten, und an seinen Enden verschweißten Flachmaterialstreifen gemäß Fig. 1,
- Fig. 8 bis 16: eine weitere Vorrichtung zum Aufschieben von Darmabschnitten auf ein in Form eines Flachmaterial-streifens vorhandenes Tragorgan in jeweils nacheinander ablaufenden Arbeitszuständen.

### WEGE ZUM AUSFÜHREN DER ERFINDUNG

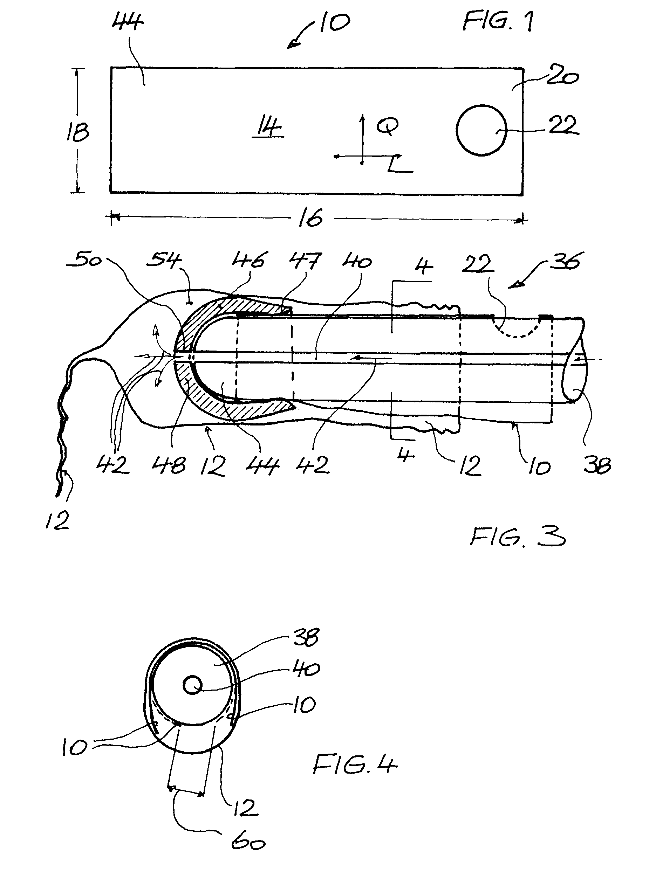

Ein Tragorgan 10, auf das Darmabschnitte 12 aufgefädelt werden sollen, besteht aus einem Flachmaterial-Streifen 14, der eine gegenüber seiner Länge 16 wesentlich kleinere Breite 18 besitzt. Der Flachmaterial-Streifen 14 hat eine rechteckförmige Grundfläche. In seinem in Fig. 1 rechten Endbereich 20 ist ein Loch 22 ausgespart. An diesem Loch 20 kann ein auf einem Füllrohr einer Wurstfüllmaschine aufsitzender Darmabschnitt 12, auf dem wiederum ein oder mehrere Darmabschnitte 12 aufgefädelt sind, leicht erfasst und so von dem Rohr abgezogen werden. Durch das Loch kann die Richtungsorientierung, d.h. das vordere und hintere Ende des Streifens 14 in Bezug zur Aufschubrichtung eines Darmabschnittes 12 auf den Streifen 14 erkannt werden. Statt oder alternativ dazu könnte auch eine Markierung (Einprägung, Aufdruck) an dem Streifen angebracht werden.

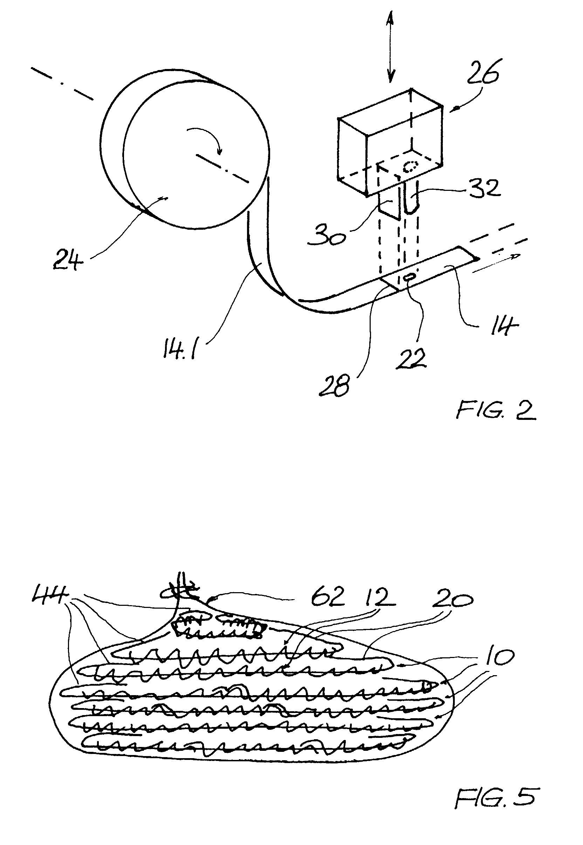

Der das Tragorgan 10 darstellende Flachmaterial-Streifen 14 ist gemäß Fig. 2 auf einem Rollenkörper 24 aufgewickelt. Beim Abziehen des aufgewickelten Flachmaterials 14.1 werden mit Hilfe einer Abtrennvorrichtung 26 sowohl Quer-Schnitte 28 mittels einer Stanzschneide 30 als auch jeweils ein Loch 22 mittels einer stabförmigen Stanze 32 gleichzeitig hergestellt. Durch den Quer-Schnitt 28 werden einzelne Flachmaterial-Streifen 14, die jeweils Tragorgane 10 darstellen, hergestellt. Gleichzeitig wird im Endbereich des jeweils vorderen Flachmaterial-Streifens 14 das gemäß Fig. 1 zum besseren Greifen und zur Richtungsorientierung vorgesehene Loch 22 hergestellt.

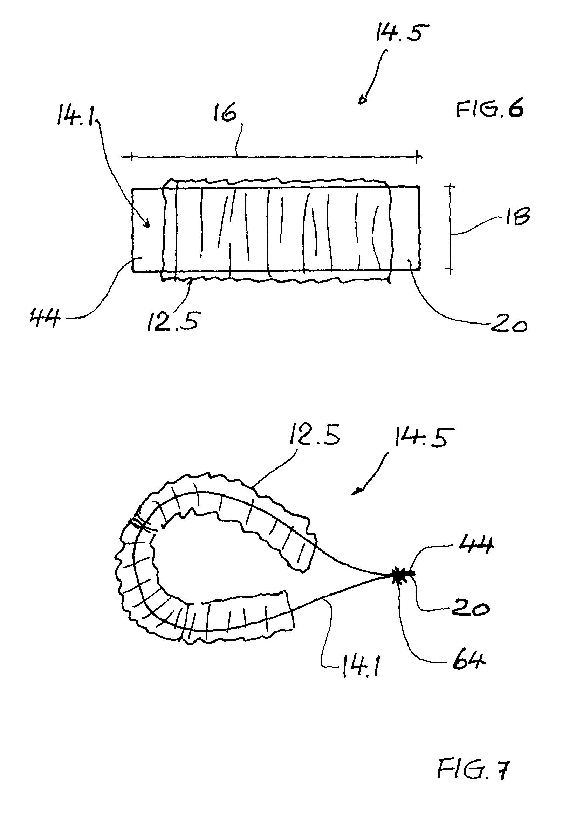

Auf die so hergestellten einzelnen Tragorgane 10 werden in einer Aufschubvorrichtung 36 ein oder mehrere Darmabschnitte 12 aufgeschoben (Fig. 3). Die Aufschubvorrichtung 36 besitzt einen auskragenden Haltedorn 38, der bei der Ausbildung nach Fig. 3 mit einer zentralen Längsbohrung 40 versehen ist. Durch diese Längsbohrung 40 kann Salzlake 42 hindurchgedrückt werden, um den Aufschiebevorgang eines Darmabschnittes 12 zu erleichtern.

Das Tragorgan 10 ist mit seinem in Fig. 3 linken, vorderen Endbereich 44 durch eine Klemmbüchse 46 auf dem Haltedorn 38 lagefixiert gehalten. Diese Klemmbüchse 46 ist im vorliegenden Fall von vorn auf den Haltedorn 38 aufgeschoben und klemmt mit ihrem umlaufenden freien Rand 47 das Tragorgan 10 gegen den Haltedorn 38. Im mittleren Bodenbereich 48 der Klemmbüchse 46 ist eine zentrale Öffnung 50, um den Durchtritt der Salzlake 42 aus der Längsbohrung 40 in den vor der Klemmbüchse 46 vorhandenen Darmbereich 54 des Darmabschnittes 12 zu ermöglichen. In diesem Darmbereich 54 wird der Darmabschnitt 12 aufgeweitet. Dadurch kann der Darmabschnitt 12 nacheinander leicht und sicher über die Klemmbüchse 46 hinweg auf das Tragorgan 10 aufgeschoben werden.

Auf dem Halterohr 38 liegt das in Längsrichtung L und in Querrichtung Q sehr biegeweiche Tragorgan 10 schlaff nach unten (Fig. 4). Im vorliegenden Fall ist die gesamte Breite 18 des Tragorgans 10 kleiner als der Umfang 58 des Halterohrs 38, wie die gestrichelte Linie von 10 in Fig. 4 verdeutlicht. Dadurch kann das Tragorgan 10 das Halterohr 38 in Querrichtung lediglich bis auf einen freibleibenden Umfangsbereich 60 einhüllen.

Nach Beendigung des Aufschubvorganges wird die Klemmbüchse 46 von dem Halterohr 38 abgenommen und anschließend das Tragorgan 10 mit aufsitzendem Darmabschnitt 12, oder mit mehreren aufsitzenden Darmabschnitten 12, von dem Halterohr 38 abgezogen. Die von Darmabschnitten 12 freien Endbereiche 44, 20 des Tragorgans 10 werden aufeinander umgeschlagen (Fig. 5). Auf diese Weise wird verhindert, dass Darmabschnitte von dem Tragorgan 10 herunterrutschen können. Derartig umgeschlagene Tragorgane 10 können dann schichtweise übereinandergelegt in ein Netz 62 eingelagert werden. Dieses Netz 62 kann dann in ein Eimer-Behältnis eingelagert werden. Dabei wird soviel Salz beziehungsweise Salzlake in das Behältnis eingefüllt, dass eine sichere Umhüllung der Darmabschnitte 12 mit Salz beziehungsweise Salzlake sichergestellt ist.

Auf dem in Fig. 5 dargestellten, aus Kunststoff bestehenden Tragorgan 14.5 ist ein Rinder-Darmabschnitt 12.5 aufgeschoben und in Ziehharmonikafalten zusammengeschoben. Der Flachmaterial-Streifen 14.5 besitzt ebenfalls eine gegenüber seiner Länge 16 wesentlich kleinere konstante Breite 18. Da der Endbereich eines Rinder-Darmabschnittes sich auf einem Tragorgan nicht umkrempeln oder umstülpen kann - unabhängig von der Aufschieberichtung der Darmabschnitte auf das Tragorgan zu der Abziehrichtung des Tragorgans aus den Rinder-Darmabschnitten heraus - braucht sein eines Ende nicht beispielsweise abgeschrägt zu werden oder ein Griffloch zu besitzen, um anzuzeigen, in welche Richtung der oder die Darmabschnitte auf den Flachmaterial-Streifen 14.5 aufgeschoben worden sind.

In der Figur 6 ist der Transportzustand des Tragorgans 14.5 mit seinen aufgeschobenen und in Ziehharmonikafalten abgelegten Rinder-Darmabschnitten 12.5 dargestellt. In diesem Transportzustand ist das eine beispielsweise linke Ende 44 auf das andere, rechte Ende 20 umgeschlagen. Im übereinanderliegenden Bereich der beiden Enden 44, 20 sind die selben über eine Thermo-Schweißverbindung 64 aneinander befestigt. Die auf dem Flachmaterial-Streifen 14.5 vorhandenen Rinder-Darmabschnitte 12.5 können also nicht von dem Streifen 14.5 herunterrutschen. Insbesondere bei Rinderdärmen wäre dies aufgrund ihrer relativ dicken Darmwandung, ihres großen Darmquerschnittes und ihres damit verbundenen relativ hohen Eigengewichtes ansonsten kaum zu vermeiden.

Statt der Schweißverbindung, die insbesondere bei einem aus Kunststoff bestehenden Flachmaterial-Streifen 14 leicht vorgesehen werden kann, können die beiden Enden 44 und 20 auch miteinander verheftet, verklebt oder auf sonstige Weise aneinander befestigt werden.

Die Kennzeichnung der auf den Flachmaterial-Streifen 14 jeweils vorhandenen Darmabschnitte nach ihrer Art und ihrer Länge und gegebenenfalls Größe könnte über die Art der gegenseitigen Befestigung der beiden Enden 44 und 20 erfolgen. So könnte beispielsweise die Thermoschweißverbindung 64 entsprechend unterschiedlich ausgebildet werden. So könnten in der Anzahl, in ihrer Grundrissgestalt und in ihrer gegenseitigen Anordnung unterschiedliche Schweiß-"Punkte" vorgesehen werden. Auch könnten Schweißlinien in Art von Buchstaben oder sonstigen Zeichen vorgesehen werden.

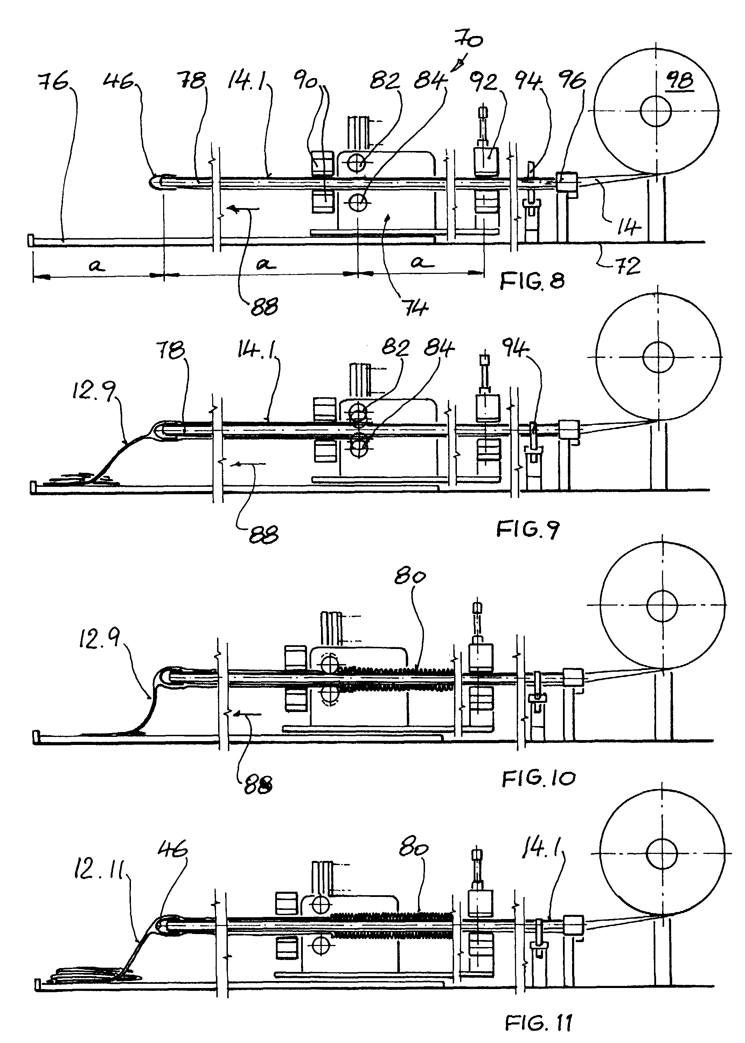

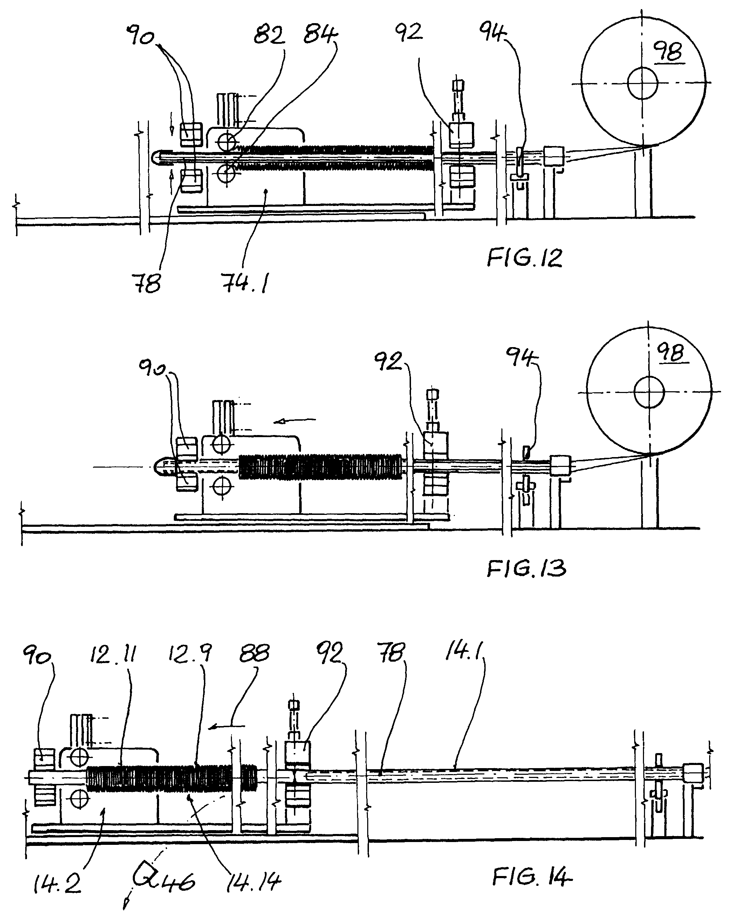

In den Figuren 8 bis 16 ist eine halbautomatische Aufziehvorrichtung 70 in verschiedenen Arbeitspositionen dargestellt. Die Aufziehvorrichtung 70 ruht auf einem Boden, wie beispielsweise einem Hallenboden 72, auf. Sie besitzt einen Schlitten 74, der auf einer Führungsbahn 76 zwischen den in den Figuren 8 und 14 dargestellten extremen Positionen verfahrbar ist. Parallel neben dem Schlitten 74 ist ein Tragdorn 78 vorhanden, auf dem mehrere Darmabschnitte 12.9, 12.11 (Fig. 9, 11) nacheinander aufgeschoben und auf dem Dorn 78 in Ziehharmonikafalten abgelegt werden können.

Die Ziehharmonikafalten werden durch eine obere und untere Aufschubrolle 82, 84 bewirkt, die auf dem verfahrbaren Schlitten 74 gegensinnig rotierbar antreibbar und zusätzlich in Richtung quer zur Längsachse 86 des Dornes 78 verstellt werden können.

In Abziehrichtung 88 vor den Aufschubrollen 82, 84 ist an dem Schlitten 74 ein Bandabzieher 90 befestigt, wie noch näher beschrieben wird.

In Abziehrichtung 88 hinter den Aufschubrollen 82, 84 ist an dem Schlitten 74 ein Bandabtrenner 92, wie ebenfalls nachstehend noch näher beschrieben wird. Schließlich ist hinter dem Bandabtrenner 92 noch ein Bandgreifer 94 vorhanden, hinter dem noch ein Bandeinlauf 96 vorhanden ist. Bandgreifer 94 und Bandeinlauf 96 sind ortsfest am Boden 72 befestigt. In Abziehrichtung 88 ist schließlich hinter dem Bandeinlauf 96 noch eine Rolle 98 drehbar positioniert, auf der ein Flachmaterialstreifen 14 als endloses Band 14.1 aufgerollt vorhanden ist. Bandabzieher 90 und Bandgreifer 94 wirken als Vorrichtung zum Halten des Flachmaterialstreifens 14.1. Die Aufziehvorrichtung 70 funktioniert auf folgende Weise.

In der in Fig. 8 dargestellten Ausgangsposition ist von der Rolle 98 das Band 14.1 von einem Bediener von Hand durch den Bandeinlauf 96, den bezüglich des Bandes offenen Bandgreifer 94 und den bezüglich des Bandes ebenfalls offenen Bandabtrenner 92 hindurch über den Dorn 78 in Abziehrichtung 88 geschoben worden. Die beiden Aufschubrollen 82, 84 sind dabei nach oben beziehungsweise unten vom Dorn 78 wegbewegt. Auch der Bandabzieher 90 behindert das Durchführen des Bandes 14.1 bis an das vordere Ende 100 des Dornes 78 nicht. Im Bereich des vorderen Endes 100 wird das Band 14.1 mit Hilfe einer Klemmhülse oder Klemmbüchse 46 an dem Dorn 78 befestigt. Dazu wird die Klemmbüchse 46 auf den Dorn 78 aufgeschoben und dabei das Band 14.1 klemmend an dem Dorn 78 gehalten. Auch die Klemmbüchse 46 stellt damit eine Haltevorrichtung für den Flachmaterialstreifen dar.

Das Band 14.1 kann eine beliebige Querschnittsform haben. So kann das Band 14.1 auch in Form eines von oben auf den Dorn 78 aufliegenden Schlauches ausgebildet sein. Im vorliegenden Fall ist das Band 14.1 allerdings ein Flachmaterialstreifen, der eine derartige Breite 18 (Fig. 1) hat, dass es den Dorn 78 lediglich oben und von der Seite bedeckt. Bis auf den Bereich der Klemmbüchse 46 liegt das Band 14.1 im Bereich zwischen der Klemmbüchse 46 und dem Bandeinlauf 96 mehr oder weniger flach oben auf dem Dorn 78 auf beziehungsweise hängt schlaff um den Dorn 78 herum.

Anschließend wird ein Darmabschnitt 12.9 von Hand über die Klemmbüchse 46 und über den Dorn 78 bis kurz hinter die Aufschubrollen 82, 84 geschoben (Fig. 9). Um die Gleitfähigkeit des Darmes 12.9 auf dem Band 14.1 zu begünstigen, wird ein minimaler Flüssigkeitsstrahl, wie beispielsweise der in Fig. 3 dargestellte Strahl 42, durch eine zentrische Längsbohrung des Dornes 78 hindurchgedrückt, so wie dies im Zusammenhang mit der Fig. 3 beispielhaft dargestellt ist.

Anschließend werden die beiden Aufschubrollen 82, 84 in gegenseitige Rotation versetzt und von oben beziehungsweise unten an den Darmabschnitt 12.9 angelegt. Das Absenken und das rotierende Antreiben der Aufschubrollen 82, 84 erfolgt durch maschinelle Antriebe. Vorher ist der Bandgreifer 94 geschlossen worden, so dass durch die rotierenden Aufschubrollen 82, 84 das Band 14.1 sich nicht nach hinten, d.h. gemäß Fig. 10 nach rechts in den Bereich der Rolle 98 verschieben kann.

Während der an dem Darm rotierend anliegenden Aufschubrollen 82, 84 bewegt sich der Schlitten 74 in Abziehrichtung 88, d.h. in Fig. 10 nach links. Jede der entstehenden Ziehharmonikafalten 80 beeinflusst nicht die bereits entstandenen Falten 80, so dass bereits entstandene Falten 80 nicht entgegen der Abziehrichtung 88 verschoben werden. Die Vorschubgeschwindigkeit des Schlittens 74 ist damit der Geschwindigkeit der entstehenden Falten angepasst.

Sobald der Darmabschnitt 12.9 vollständig durch die rotierenden Aufschubrollen 82, 84 hindurchgewandert ist, wird die Aufziehvorrichtung 70 gestoppt. Dadurch stoppt der Schlitten 74 seine Bewegung. Außerdem werden die Aufschubrollen 82, 84 vom Dorn nach oben und unten abgehoben und in ihrer Rotation angehalten. Es kann nun ein weiterer Darmabschnitt 12.11 über die Klemmbüchse 46 hinweg auf den Dorn 78 und das auf dem Dorn 78 aufliegende Band 14.1 aufgeschoben werden (Fig. 11), so wie dies bereits im Zusammenhang mit der Fig. 9 beschrieben ist.

Anschließend werden die Aufschubrollen 82, 84 in Rotation versetzt und gegen den Darm geschoben, so wie das in Fig. 10 bereits beschrieben ist. Dadurch wird auch der Darmabschnitt 12.11 durch die Aufschubrollen 82, 84 in eine Ziehharmonikafaltung gelegt. Der Schlitten 74 fährt bei diesem Infaltenlegen des Darmabschnitts 12.11 wieder in Richtung Abziehrichtung 88.

Es kann noch ein weiterer Darmabschnitt in vergleichbarer Weise auf das Band 14.1 aufgeschoben werden, bevor der Schlitten 74 seine in Fig. 12 dargestellte Stellung kurz vor dem Ende des Dorns 78 einnimmt. An dieser in Fig. 12 dargestellten Stellung des Schlittens 74, die durch das Bezugszeichen 74.1 dargestellt ist, laufen folgende Arbeitsschritte parallel ab: Die Aufschubrollen 82, 84 werden von dem Arm nach oben und unten abgehoben und in ihrer Rotation gestoppt; der Bandabzieher 90 wird gegen den Dorn 78 geführt; dabei greifen seine entsprechend geformten Klemmbacken das Band fest ein, ohne dabei den Dorn 78 gleichzeitig zwischen sich einzuklemmen; ferner öffnet der hinten angeordnete Bandgreifer 94 (Fig. 13).

Anschließend wird der Schlitten 74.1 weiter in Abziehrichtung 88 bewegt, wobei sein Bandabzieher 90 das Band klemmend hält und dabei mit sich in Abziehrichtung 88 mitzieht. Bei dieser Bewegung in Abziehrichtung 88 schieben die Klemmbacken des Bandabziehers 90 die Klemmbüchse 46 vom Dorn 78 und damit auch vom Band 14 ab. Die Klemmbüchse 46 fällt nach unten weg (Fig.14). Nähere Angaben zu möglichen Ausbildungen des Bandabziehers 90 und seiner Klemmbacken sind den Unteransprüchen 11 und 12 zu entnehmen.

Der Schlitten 74 fährt bis in seine Endstellung 74.2 (Fig. 14). Dabei hat er das mit den im vorliegenden Beispielsfall zwei Darmhälften 12.9, 12.11 belegten Darmabschnitt 14.14 vollständig vom Bereich des Dornes 78 nach vorne abgeschoben. Der nach vorne von dem Dorn abgezogene Bereich des Bandes 14 ist bei dieser Schlitten-Fahrt von hinten von der Rolle 98 nachgezogen worden, so dass der Dorn 78 nach wie vor von oben und teilweise von der Seite durchgehend mit dem Band bedeckt ist. In Abziehrichtung 88 ist der Abstand a zwischen den Aufschubrollen 82, 84 und dem Bandabtrenner 92 etwa so groß wie der Abstand a zwischen den Aufschubrollen 82, 84 und dem freien Ende des Dorns 78. Ebenfalls zumindest um dieses Maß a überragen die Führungsbalken 76 das freie Ende 100 des Dornes 78.

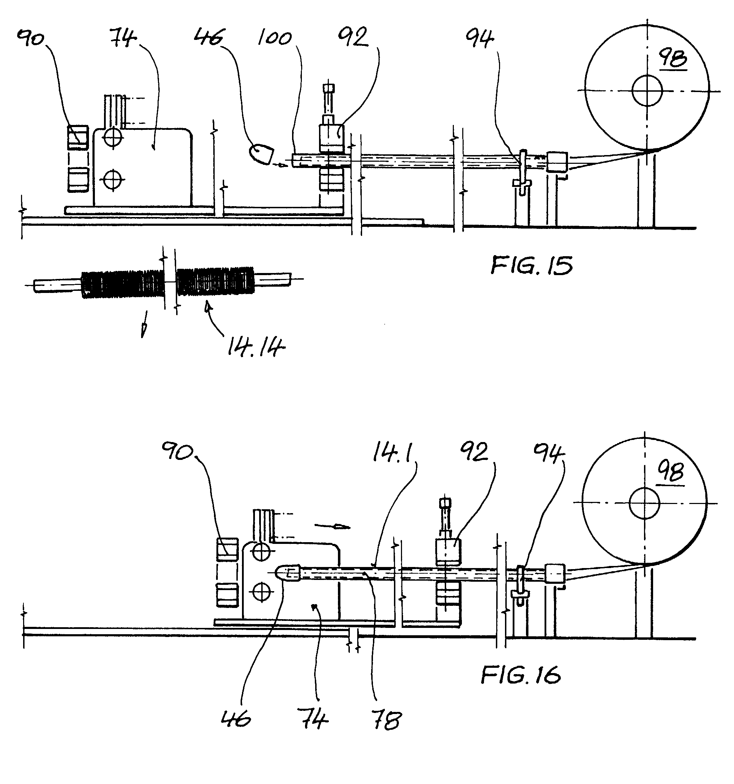

Der hinter dem Schlitten 74 vorhandene Bandabtrenner 92 wird aktiviert und trennt das Band 14 durch. Dieses Durchtrennen erfolgt außerhalb des Bereiches des Dornes 78. Der Bandabschnitt 14.14 (Fig. 14, 15) ist damit vom übrigen Bereich des auf dem Dorn 78 vorhandenen Bandes separiert und kann nach Öffnen des Bandtrenners 92 und des Bandabziehers 90 nach unten in beispielsweise ein in Fig. 15 nicht dargestelltes Gefäß hineinfallen. Anschließend wird der Schlitten 74 aus seiner Position 14.2 wieder in seine in Fig. 8 dargestellte Ausgangsstellung zurückgefahren und auch die Klemmbüchse 46 wieder auf das vordere Ende 100 des Dorns 78 aufgesteckt und dabei das auch im vorderen Ende 100 vorhandene Band eingeklemmt am Dorn 78 gehalten.

Bei der Rückwärtsbewegung des Schlittens 74.2 ist der Bandgreifer 94 wieder geschlossen worden, damit beim anschließenden Aufziehen und Infaltenlegen eines weiteren Darmabschnittes das Band sich nicht nach rückwärts verschieben kann. Es wiederholt sich dann der Arbeitsablauf, so wie er vorstehend in den Figuren 9 und folgende angegeben ist.

## Patentansprüche

1. Verfahren zum Aufschieben von zumindest einem Darmabschnitt auf ein Tragorgan,
- wobei anschließend jedes derartige Tragorgan mit dem einen oder den mehreren aufgeschobenen, in Ziehharmonikafalten gelegten Darmabschnitten auf das Füllrohr einer Füllmaschine aufgeschoben wird,
**dadurch gekennzeichnet**, dass
- jeder eine Darmfalte bildende Darmabschnitt in Aufschieberichtung des Darmes auf dem Tragorgan unter Bildung einer Darmfalte verschoben wird, ohne dass der Anfang des betreffenden Darmabschnittes dabei in Aufschieberichtung mit verschoben wird, so dass jede neue Darmfalte an bereits vorhandenen Darmfalten hingeschoben wird, ohne dabei bereits gefaltete Darmbereiche längs des Tragorgans zu verschieben.

2. Verfahren nach Anspruch 1,
**dadurch gekennzeichnet**, dass
- anschließend das Tragorgan von dem Füllrohr in Aufschieberichtung so abgezogen wird, dass der Darmabschnitt unmittelbar auf dem Füllrohr zu liegen kommt,
- anschließend der Darmabschnitt mit Wurst oder vergleichbaren Füllmassen befüllt wird,
- unter Verwendung eines auf einer Rolle aufgewickelten Materialstreifens als Tragorgan,
**dadurch gekennzeichnet**, dass
- der Materialstreifen als Band von der Rolle auf einen stabförmigen Dorn in dessen Längsrichtung, das heißt in Abziehrichtung des Bandes von der Rolle, aufgeschoben wird,
- der vordere Endbereich des Bandes am freien Endbereich des Dornes befestigt wird,
- ein erster Darmabschnitt auf das auf dem Dorn befindliche Band aufgeschoben und auf dem Band in Längsrichtung gerafft abgelegt wird, wobei jede neue Darmfalte an die bereits vorhandenen Darmfalten hingeschoben wird, ohne den bereits gefalteten Darmbereich dabei längs des Bandes zu verschieben,
- gegebenenfalls weitere Darmabschnitte in gleicher Weise wie der erste Darmabschnitt auf das Band aufgeschoben und gerafft werden,
- anschließend die Befestigung des vorderen Endbereiches des Bandes gelöst wird,
- der Bandabschnitt mit dem oder den aufsitzenden Darmabschnitten in Abziehrichtung des Bandes von dem Dorn heruntergezogen und vom übrigen Band abgetrennt wird, so dass der Bandabschnitt mit dem oder den aufsitzenden Darmabschnitten vom übrigen Band und vom Dorn separiert werden kann.

3. Verfahren nach Anspruch 1 oder 2,
**dadurch gekennzeichnet**, dass
- als Tragorgan ein biegeweicher, in allen seinen Oberflächenbereichen ebenflächig ausgebildeter Flachmaterialstreifen verwendet wird.

4. Verfahren nach nach einem der vorstehenden Ansprüche,
**dadurch gekennzeichnet**, dass
- anschließend der vordere Endbereich des noch am Dorn befindlichen Bandes am freien Endbereich des Dornes wieder befestigt wird, so dass wieder ein Darmabschnitt auf das auf dem Dorn befindliche Band aufgeschoben und in Längsrichtung in Ziehharmonikafalten gerafft werden kann.

5. Vorrichtung (70) zum Durchführen des Verfahrens nach einem der vorstehenden Ansprüche,
**gekennzeichnet**, durch
- eine Abwickelstation (98) für den zu einem endlosen Band (14) auf einer Rolle aufgewickelten Flachmaterial-streifen,
- ein einen Dorn (78) und Aufschubrollen (82, 84) aufweisendes Darmaufziehgerät, wobei die Aufschubrollen (82, 84) längs des Dornes (78) verfahrbar und quer zum Dorn (78) verstellbar sind,
- eine erste Haltevorrichtung (46) für das auf dem Dorn (78) aufliegende Band (14) am freien Ende (100) des Dorns (78),
- eine zweite Haltevorrichtung (92) für das Band (14) in Abziehrichtung (88) vor den verfahrbaren Aufschubrollen (82, 84),
- eine dritte Haltevorrichtung (94) für das Band (14) in Abziehrichtung (88) hinter den verfahrbaren Aufschubrollen (82, 84),
- eine Abtrennvorrichtung (92) für das Band (14) zwischen den Aufschubrollen (82, 84) und der dritten Haltevorrichtung (94).

6. Vorrichtung nach Anspruch 5,
**dadurch gekennzeichnet**, dass
- der Abstand (a) zwischen den Aufschubrollen (82, 84) und der Abtrennvorrichtung (92) in Abziehrichtung (88) etwa so groß ist wie der Abstand (a) zwischen den Aufschubrollen (82. 84) und dem freien Ende (100) des Dorns (78).

7. Vorrichtung nach einem der Ansprüche 5 oder 6,
**dadurch gekennzeichnet**, dass
- die zweite Haltevorrichtung (90) in Abziehrichtung (88) über das freie Ende (100) des Dorns (78) hinaus verfahrbar ist.

8. Vorrichtung nach einem der Ansprüche 5 bis 7,
**dadurch gekennzeichnet**, dass
- die zweite Haltevorrichtung (90) zusammen mit den Aufschubrollen (82, 84) auf einem verfahrbaren Schlitten (74) vorhanden ist.

9. Vorrichtung nach Anspruch 8,
**dadurch gekennzeichnet**, dass
- die Abtrennvorrichtung (92) mit diesem Schlitten (74) verfahrbar ist.

10. Vorrichtung nach einem der Ansprüche 5 bis 9,
**dadurch gekennzeichnet**, dass
- die dritte Haltevorrichtung (94) zwei Seitenbacken besitzt, die von der Seite her gegen das oben und seitlich den Dorn zumindest teilweise bedeckende Band (14) drückend anlegbar sind.

11. Vorrichtung nach einem der Ansprüche 5 bis 10,
**dadurch gekennzeichnet**, dass
- die zweite Haltevorrichtung (90) mehrere Pressteile so besitzt, dass diese Pressteile das auf dem Dorn (78) anliegende Band (14) so zwischen sich halten können, dass sie das Band (14) von dem Dorn (78) abziehen und im abgezogenen Zustand festhalten können.

12. Vorrichtung nach Anspruch 11,
**dadurch gekennzeichnet**, dass
- das obere und das untere Pressteil jeweils einen keilförmigen Freiraum aufweisen,
- im zusammengefahrenen Zustand der Dorn mit auf ihm anliegenden Band in dem durch die beiden Freiräume geschaffenen Hohlraum Platz findet.

13. Vorrichtung nach einem der Ansprüche 5 bis 12,
**dadurch gekennzeichnet**, dass
- die Abtrennvorrichtung (92) zumindest ein hin- und herbewegbares Messer besitzt.

14. Vorrichtung nach einem der Ansprüche 5 bis 13,
**dadurch gekennzeichnet**, dass
- die erste Haltevorrichtung eine auf den Dorn (38, 78) aufsetzbare Buchse oder Büchse (46) ist.

15. Vorrichtung nach Anspruch 14,
**dadurch gekennzeichnet**, dass
- die Buchse oder Büchse (46) aufschraubbar oder anklemmbar ist.

16. Vorrichtung nach Anspruch 14 oder 15,
**dadurch gekennzeichnet**, dass
- die Buchse oder Büchse (46) direkt oder indirekt an dem Dorn (78) befestigbar ist.

17. Vorrichtung nach einem der Ansprüche 14 bis 16,
**dadurch gekennzeichnet**, dass
- die Büchse (46) einen ausgerundeten Bodenbereich (48) besitzt.

18. Vorrichtung nach einem der Ansprüche 14 bis 17,
**dadurch gekennzeichnet**, dass
- zumindest eine relativ kleine Öffnung (50) in dem Bodenbereich (48) und/oder im Mantelbereich der Büchse (46) vorhanden ist.

19. Vorrichtung nach einem der Ansprüche 5 bis 18,
**dadurch gekennzeichnet**, dass
- zumindest ein Längskanal (40) für Wasser und/oder Salzlake (42) längs des Dornes (38, 78) vorhanden ist.

20. Vorrichtung nach Anspruch 19,
**dadurch gekennzeichnet**, dass
- ein Längskanal in einer in dem Dorn (38, 78) vorhandenen Nut ausgebildet ist.

21. Vorrichtung nach Anspruch 20,
**dadurch gekennzeichnet**, dass
- ein Längskanal-Körper in der Nut eingelagert ist.

22. Tragorgan (10, 14) für mit Wurst oder dergleichen Füllmassen auf einer Wurstfüllmaschine befüllbare Darmabschnitte (12), wobei zumindest ein in Ziehharmonikafalten (80) auf dem Tragorgan abgelegter Darmabschnitt (12) vorhanden ist,
**dadurch gekennzeichnet**, dass
- der zumindest eine Darmabschnitt ein Rinder-Darmabschnitt (12.5) ist,
- die mit einem oder mehreren Darmabschnitten (12.5) nicht belegten beiden freien Endbereiche (20, 40) des Tragorgans einzeln umgeschlagen oder aneinander befestigt wie insbesondere miteinander verheftet und/oder verklebt und/oder verschweißt sind.

23. Tragorgan (10, 14) mit mindestens einem mit Wurst oder dergleichen Füllmasse auf dem Füllrohr einer Wurstfüllmaschine befüllbaren Darmabschnitt (12), der in Ziehharmonikafalten (80) auf dem Tragorgan abgelegt vorhanden ist, mit einem biegeweichen Flachmaterial-streifen (14) als Tragorgan,
**dadurch gekennzeichnet**, dass
- die Breite (18) des Flachmaterialstreifens (14) geringer ist als der Umfang des Füllrohres, auf dem der Flachmaterialstreifen mit aufgeschobenen Darmabschnitten aufschiebbar ist.

24. Tragorgan nach Anspruch 22 oder 23,
**dadurch gekennzeichnet**, dass
- eine Einrichtung zur Richtungsorientierung an dem Flachmaterialstreifen (14) vorhanden ist.

25. Tragorgan nach Anspruch 24,
**dadurch gekennzeichnet**, dass eine Markierung als Richtungsorientierung an dem Streifen (14) vorhanden ist

26. Tragorgan nach Anspruch 24 oder 25,
**dadurch gekennzeichnet**, dass
- eine Griffvorrichtung, insbesondere in Form eines Griffloches (20) als Richtungsorientierung in dem Streifen (14) vorhanden ist.
